# EUROPÄISCHE PATENTSCHRIFT

(11) **EP 1 053 133 B1**
(45) Veröffentlichungstag und Bekanntmachung des Hinweises auf die Patenterteilung: **19.09.2001**
(21) Anmeldenummer: 99907479.2
(22) Anmeldetag: 02.02.1999
(51) Int. Cl.: B60R 21/18

(54) **DREIPUNKT-SICHERHEITSGURT**
THREE-POINT SEAT BELT
CEINTURE DE SECURITE A TROIS POINTS

(30) Priorität: 04.02.1998 DE 19804365
(43) Veröffentlichungstag der Anmeldung: 22.11.2000
(73) Patentinhaber: BREED AUTOMOTIVE TECHNOLOGY, INC., Lakeland, FL 33807-3050 (US)
(72) Erfinder: SPECHT, Martin, D-82340 Feldafing (DE)
(74) Vertreter: Nöth, Heinz, Dipl.-Phys.
(86) Internationale Anmeldenummer: EP9900677
(87) Internationale Veröffentlichungsnummer: WO9939940

(56) Entgegenhaltungen:
- EP-A- 0 366 518
- DE-A- 2 432 968
- FR-A- 2 200 813
- GB-A- 2 269 791
- US-A- 5 383 713
- US-A- 5 474 326

## Beschreibung

Die Erfindung betrifft einen Dreipunkt-Sicherheitsgurt nach dem Oberbegriff des Patentanspruches 1.

Bei einem derartigen aus der US 5,474,326 A bekannten Dreipunkt-Sicherheitsgurt ist ein innerer Luftschlauch vorgesehen, welcher einen Gaskanal zum Befüllen der aufblasbaren Schulter- und Beckengurtteile bildet. Im nicht aufgeblasenen Zustand ist der Luftschlauch kollabiert, so dass der aufblasbare Sicherheitsgurt die Form eines flachen Bandes hat. Es besteht die Gefahr, dass an der zwischen dem Schultergurtteil und dem Beckengurtteil liegenden Umlenkstelle des Sicherheitsgurtes in der Schlosszungenöse der kollabierte Luftschlauch geknickt ist, so dass eine Befüllung des Schultergurtbereiches nicht oder nur mit Schwierigkeiten erreicht wird.

Aus der US 5,383,713 A sind an der Schlosszunge im Bereich der Umlenköse, Maßnahmen vorgesehen, durch die eine Volumenvergrößerung des Sicherheitsgurtes im Bereich der Umlenköse ermöglicht wird. Am bekannten Sicherheitsgurt sind jedoch keine Maßnahmen vorhanden, welche einen ständig offenen Gaskanal zwischen dem Schultergurtteil und dem Beckengurtteil für eine, sichere Befüllung der Gurtinnenräume gewährleisten.

Bei einem aus der DE 43 26 499 A1 bekannten Dreipunkt-Sicherheitsgurt erfolgt die Füllgaszuführung über das Gurtschloß und die beim Gurtanlegen in das Gurtschloß eingesetzte Steckzunge. Diese Gaszuführung von der Steckzunge in das Beckengurtteil und das Brustgurtteil erfordert die Befestigung der Steckzunge am Gurtband. Eine Anpassung an unterschiedliche Insassengrößen erfordert daher einen zusätzlichen Aufwand in Form eines Gurtaufrollers am jeweiligen Ende des Schultergurtteiles und Beckengurtteiles.

Bei dem aus der DE OS 24 00 992 bekannten Sicherheitsgurt ist eine Befestigungsöse im Übergangsbereich, in welchem Beckengurtteil und Schultergurtteil zusammenlaufen, durch Vernähen der beiden zusammenlaufenden Gurtteile am Gurtband befestigt. Auch hier wird eine Anpassung von Schulter- und Beckengurtteil an unterschiedliche Fahrzeuginsassengrößen mittels an den jeweiligen Enden der Schulter- und Beckengurtteile vorgesehenen Gurtaufrollern erreicht. Eine ständig offene Gasströmungsverbindung zwischen den Gurtinnenräumen des Schultergurtteiles und Beckengurtteiles wird durch einen neben der Vernähung geführten Schlauch zwischen den beiden Gurtteilen und geschaffen. Das Gas wird über den Schlauch, welcher durch das Schultergurtteil verläuft, zugeführt. Der Schlauch wird hierzu um eine im Bereich des Gurtaufrollers am oberen Ende der Sitzlehne vorgesehene Umlenkstelle umgelenkt. Ein Gewicht ist vorgesehen, um eine straffe Schlauchführung beim An- und Ablegen des Sicherheitsgurtes zu erreichen.

Der aus der DE-OS 24 32 968 bekannte Sicherheitsgurt besteht aus einem Schlauchmaterial, welches einen durchgehenden Innenraum für die einzelnen Gurtteile bildet. Im Normalbetrieb wird im Gurtinnern ein Unterdruck erzeugt, um eine flache Gurtform zu erhalten. Durch das Schlauchmaterial umgebende Federn wird erreicht, daß bei Aufhebung des Unterdrucks, beispielsweise infolge überhöhter Fahrzeugverzögerung, der Gurt in die Schlauchform gebraucht wird und Luft zum Befüllen des Schlauches zugeführt wird.

Der aus der DE 20 08 048 C3 bekannte Dreipunkt-Sicherheitsgurt ist statisch ohne Gurtaufroller ausgebildet. Der Brust/Schuitergurtbereich und der Beckengurtbereich werden über eine gemeinsame Ventilstelle von einer Druckluftflasche mit Füllgas versorgt. Hierbei sollen im Brust/Schultergurtbereich und Beckengurtbereich Gurtteile aufgeblasen werden, welche den Anlagedruck des Sicherheitsgurtes am Fahrzeuginsassen verringern und außerdem einen Aufprallschutz gegenüber Fahrzeugteilen, wie Lenkrad, Armaturenbrett und dergleichen, gewährleisten. Wie die Anbindung des Sicherheitsgurtes an den Fahrzeugaufbau beim Anlegen an der Schloßseite erfolgen soll, ist im einzelnen nicht gezeigt.

Ferner ist aus der EP 0 366 518 A1 ein aufblasbarer in einem Fahrzeugsitz integrierter Dreipunkt-Sicherheitsgurt bekannt, bei welchem die Gaszuführung für das Füllgas an einem Ende des Beckengurtteiles erfolgt, der mit dem am Fahrzeugaufbau vorgesehenen Endbeschlag verbunden ist. Dabei erfolgt zunächst die Befüllung des Beckengurtteils und anschließend wird das Füllgas um eine im Bereich des anderen Endes des Beckengurtes vorgesehene Umlenkstelle zur Befüllung auch des Brust/Schultergurtbereichs geleitet. Um während des Befüllens der beiden Gurtbereiche an der Umlenkstelle einen Gasdurchfluß zu schaffen, ist das Gurtband an dieser Stelle in einer speziellen Führung an dem Ende des Beckengurtteils, an welchem normalerweise ein Gurtschloß vorgesehen ist, gehalten. Die spezielle Führung bzw. Halterung der Umlenkstelle zwischen Beckengurtteil und Brust/Schultergurtteil weicht von der herkömmlichen Ausbildung eines Gurtschlosses ab und sieht für das Gurtband eine Umlenkstelle vor, in die das Gurtband direkt eingelegt wird und beim Befüllen eine etwa Omega-Form annimmt. Diese Anordnung weicht von der marktüblichen Fixierung des Gurtbandes mit Hilfe eines am Gurtband vorgesehenen Einsteckteils insbesondere in Form einer Zunge, die in ein am Fahrzeugaufbau vorgesehenes Gurtschloß eingesteckt wird, erheblich ab.

Aufgabe der Erfindung ist es, einen Dreipunkt-Sicherheitsgurt der eingangs genannten Art zu schaffen, bei welchem die drei Punkte, welche die Führung und Befestigung des Sicherheitsgurtes am Fahrzeugaufbau bei angelegtem Gurt gewährleisten, mit herkömmlichen Hilfsmitteln ausgestattet sind, und eine sichere Befüllung des Brust/Schultergurtbereichs und des Beckengurtes erzielt wird.

Diese Aufgabe wird erfindungsgemäß durch die Kombination der kennzeichnenden Merkmale des Patentanspruches 1 gelöst.

Der Gaskanal, welcher zumindest an einer Umlenkstelle, die an einem in ein Gurtschloß einsteckbaren Einsteckteil, insbesondere einer Steckzunge, im Gurtinnenraum vorgesehen ist, kann aus einem schlauchförmigen Stück bestehen, welches in radialer Richtung eine relativ hohe Steifigkeit aufweist, so daß auch beim Umlenken des Sicherheitsgurtbandes um die Umlenkstelle der vom Gaskanal gebildete Öffnungsquerschnitt nicht kollabiert, sondern beim Anlegen des Sicherheitsgurtes, d.h. beim Einstecken des Einsteckteils, insbesondere der Steckzunge, in ein dafür am Fahrzeugaufbau in herkömmlicher Weise vorgesehenes Gurtschloß, dieser Öffnungsquerschnitt zwischen dem Beckengurtteil und dem Brust/Schultergurtteil aufrechterhalten bleibt. Auf diese Weise wird durch den Gaskanal eine ständige Strömungsverbindung zwischen diesen beiden Gurtteilen sowohl in der Situation, in welcher der Sicherheitsgurt in Parkposition aufgerollt als auch in der angelegten Situation, aufrechterhalten. Da der Gaskanal im Übergangsbereich zwischen Beckengurtteil und Brust/Schultergurtteil unter Berücksichtigung der erforderlichen Abmessungen bei einer 5%-Frau und einem 95%-Mann angeordnet ist, befindet sich in der Parkposition der Gaskanal in dem Gurtteil, welcher im wesentlichen geradlinig von dem untenliegenden Endbeschlag zu dem etwa in Schulterhöhe am Fahrzeug vorgesehenen Umlenkbeschlag geführt ist. In der Parkposition wird daher der Gaskanal auf Durchbiegung nicht beansprucht.

Zur Bildung des Gaskanals kann ein fester Rohrkrümmer oder ein schlauchförmiges Material, welches bevorzugt im Bereich der Umlenkstelle mit einer Verstärkungsseinlage insbesondere in Wendelform, z.B. Wendelfeder, ausgestattet ist, dienen. Hierdurch wird gewährleistet, daß das den Gaskanal bildende schlauchförmige Material beim Zurückbringen aus der angelegten und um die Umlenkstelle am Einsteckteil (Einsteckzunge) geführten Anordnung in die Position aufgrund seiner Flexibilität sich etwa in eine geradlinige dem Gurtband in Parkposition angepaßte Form selbsttätig bewegt. Mit Hilfe einer Wendelfeder, welche mechanisch die geradlinige Form speichert, kann dies erreicht werden. Die wendelförmige Verstärkung (Wendelfeder) liegt vorzugsweise mit Druck an der Innenseite des Schlauches, der hierzu als Druckschlauch ausgebildet sein kann, an.

Bei einer bevorzugten Ausführungsform erfolgt die Zuführung des Füllgases an dem Ende des Beckengurtteils, welcher mit dem am Fahrzeugaufbau befestigten Endbeschlag verbunden ist. Die Gaszuführung kann von einem Gasgenerator, insbesondere Hybridgasgenerator, welcher ein Kaltgas liefert, gebildet sein. Es ist jedoch auch möglich, die Gaszuführung als gasdichte Kupplung auszubilden, welche über eine Gasleitung an einen Gasgenerator insbesondere Kaltgasgenerator zur Lieferung eines Kaltgases angeschlossen ist. In bevorzugter Weise ist die Gaszuführung (Gasgenerator bzw. gasdichte Kupplung) fest mit dem Endbeschlag verbunden, so daß die Gaszuführung sich zusammen mit dem Endbeschlag immer an die aktuelle Angurtlage, die sich beim Anlegen des Sicherheitsgurtes ergibt, angepaßt ist.

Die Verbindung des an der Umlenkstelle vorgesehenen Gaskanals am einen Ende des Beckengurtes mit der am anderen Ende des Beckengurtes vorgesehenen Gaszuführung erfolgt in bevorzugter Weise über eine flexible Gasleitung, die von einem flexiblen Schlauch gebildet werden kann. Der Gaskanal und die Gasleitung können aus einem einzigen Schlauchstück bestehen, wobei wie oben schon erläutert, im Bereich der Umlenkstelle zur Bildung des Gaskanals die Schlauchwand durch eine Verstärkungseinlage, die bevorzugt eine Metallwendel (Wendelfeder) sein kann, in radialer Richtung verstärkt ist.

Hierdurch wird gewährleistet, daß bei einem Unfallgeschehen zunächst Brust/Schultergurtteil aufgeblasen wird. Gegebenenfalls kann der Gurtinnenraum des Brust/Schultergurtteils mit aufblasbaren Kissen verbunden sein, die zusätzliche Schutzfunktionen wie Seitenaufprallschutz im Kopf- und Thoraxbereich erfüllen. Durch den Gaskanal im Bereich der Umlenkstelle zwischen Beckengurt und Brust/Schultergurt wird ein sich schnell aufbauender Gegendruck im Brust/Schultergurtteil erreicht. Anschließend erfolgt die Befüllung des Beckengurtbereichs über den Gaskanal und gegebenenfalls über einen aufgeblasenen Gurtbereich an der Umlenkstelle.

In bevorzugter Weise können in der Gasleitung, welche durch den Beckengurtteil zum Gaskanal geführt ist, Öffnungen vorgesehen sein, die beim Befüllen des Brust/Schultergurtbereiches insbesondere durch das anliegende Gurtbandgewebe noch verschlossen sind. Wenn sich im Brust/Schultergurtbereich der Gegendruck durch das eingeströmte Füllgas (Kaltgas) aufgebaut hat, wird Füllgas durch die Öffnungen seitlich in den Beckengurtbereich abgeblasen, wobei das Gurtbandgewebe von den Öffnungen weggedrückt wird.

Die Menge des vom Kaltgasgenerator gelieferten Füllgases kann so bemessen sein, daß eine Haltezeit in der Größenordnung von 120 ms erreicht wird. Diese Haltezeit kann je nach Anforderungen kürzer oder länger bemessen sein. Wenn bei einem Unfallgeschehen nach ca. 60 ms die maximale Belastung des Insassen durch den Sicherheitsgurt auftritt, kann es von Vorteil sein, daß der aufgeblasene Sicherheitsgurt weicher wird, d.h. der Fülldruck sich verringert und sich somit die Verletzungsgefahr vermindert wird. Bei der Erfindung erreicht man, daß bereits nach 20 ms der maximale Fülldruck in den aufblasbaren Gurtbereichen erreicht wird. Hierdurch wird vor allem auch ein Seitenaufprallschutz im Kopfbereich durch entsprechende Dimensionierung des Füllvolumens insbesondere im Schulterbereich erzielt.

Gegebenenfalls kann für einen Beckenknochenschutz ein örtlich fest im aufblasbaren Bekkengurtteil integriertes Airbagkissen vorgesehen sein. Bei einer Seitenintrusion der Fahrzeugstruktur hat dieses Airbagkissen eine Schutzfunktion für 5%-Frau bis 95%-Mann.

Anhand der Figuren wird an Ausführungsbeispielen die Erfindung noch näher erläutert. Es zeigt
- Fig. 1: in perspektivischer Anordnung ein Ausführungsbeispiel im Bereich eines Fahrzeugsitzes;
- Fig. 2: eine schnittbildliche Darstellung entlang einer Schnittlinie A-A in Fig. 1;
- Fig. 3: eine schnittbildliche Darstellung entlang einer Schnittlinie B-B in Fig. 1;
- Fig. 4: eine Detaildarstellung des Ausführungsbeispiels im Übergangsbereich zwischen Becken- und Brustgurtteil;
- Fig. 5: eine Detaildarstellung des Ausführungsbeispiels im Bereich einer Gaszuführung;
- Fig. 6: eine Ausführungsform für eine Umlenkstelle mit vergrößertem Umlenkradius zwischen Becken- und Brustgurtteil; und
- Fig. 7: eine weitere Ausführungsform für eine Umlenkstelle, welche einen herkömmlichen Aufbau hat.

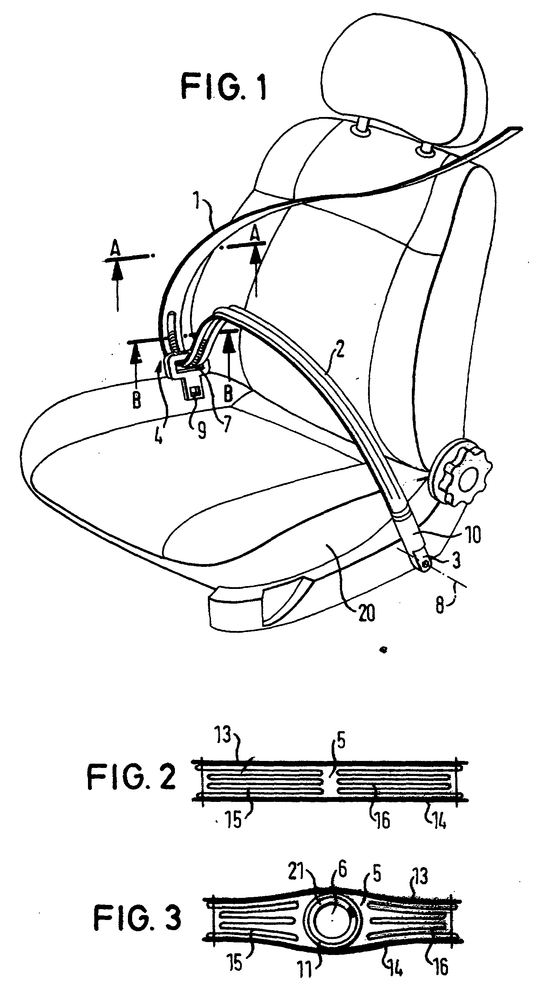

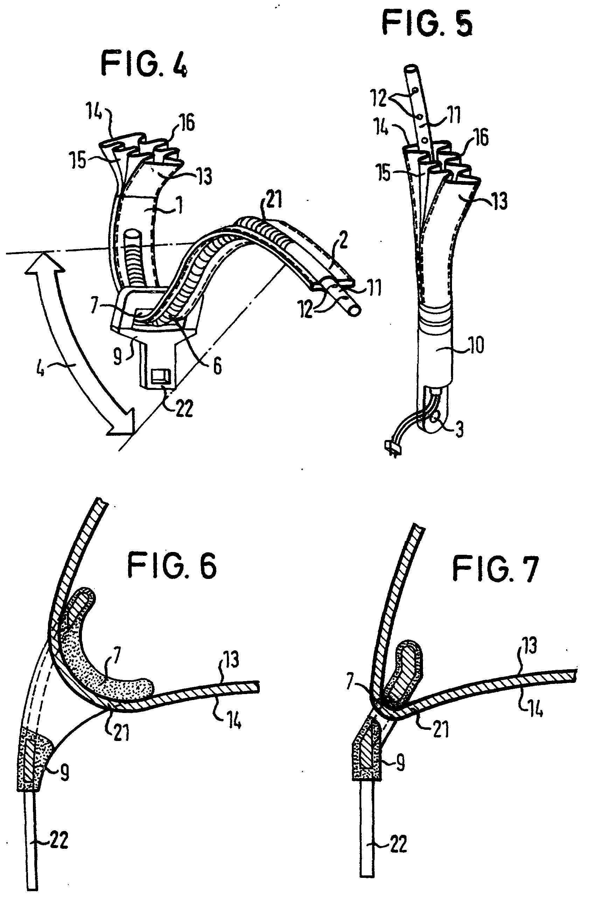

Das in der Fig. 1 dargestellte Ausführungsbeispiel zeigt einen Dreipunkt-Sicherheitsgurt im Bereich eines Fahrzeugsitzes 20. Der Sicherheitsgurt besitzt einen Beckengurtteil 2 und einen Brust/Schultergurtteil 1. Das eine Ende des Beckengurtteils 2 ist über einen Endbeschlag 3 fest mit dem Fahrzeugaufbau verbunden. Der Endbeschlag 3 kann um eine fahrzeugfeste Achse 8 verschwenkt werden, so daß eine Anpassung an die jeweilige Angurtsituation erreicht wird. Am anderen Ende des Beckengurtteiles 2 befindet sich ein Einsteckteil 9, welches in ein Gurtschloß eingesteckt werden kann. Das Einsteckteil 9 ist in Form einer Steckzunge ausgebildet. An der Steckzunge ist eine Umlenköse vorgesehen, die für das Sicherheitsgurtband eine Umlenkstelle 7 bildet. Diese Umlenkstelle 7 befindet sich beim Anlegen des Sicherheitsgurtes in einem Übergangsbereich 4 zwischen dem Brustgurtteil 1 und dem Beckengurtteil 2. Die Umlenkstelle 7 verschiebt sich innerhalb dieses Übergangbereiches 4 je nachdem, ob der angegurtete Fahrzeuginsasse die Größe einer 5%-Frau oder eines 95%-Mannes hat. Ausführungsformen der Umlenkstelle 7 sind in den Fig. 6 und 7 gezeigt.

Der Brust/Schultergurtteil 1 ist zu einer nicht näher dargestellten und in bekannter Weise ausgebildeten Umlenkstelle am Fahrzeugaufbau beispielsweise an einer B-Säule des Kraftfahrzeugs etwa in Höhe der Schulter des Fahrzeuginsassen geführt. Von dort wird das Gurtband zu einem ebenfalls nicht näher dargestellten am Fahrzeugaufbau befestigten Gurtaufroller in bekannter Weise weitergeführt. Diese Führung und Verankerung des Sicherheitsgurtes entspricht einer üblichen Verankerung und Führung eines Dreipunkt-Sicherheitsgurtes in einem Kraftfahrzeug.

Beim dargestellten Ausführungsbeispiel sind der Brust/Schultergurtteil 1 und der Beckengurtteil 2 aufblasbar ausgebildet. Wie insbesondere aus den Querschnittsdarstellungen der Fig. 2 und 3 zu ersehen ist, besitzt das Sicherheitsgurtband zwei Gurtbänder, nämlich einen Obergurt 13 und einen Untergurt 14. Diese beiden flachen Gurtbänder verlaufen parallel zueinander und bilden zwischen sich einen aufblasbaren Gurtinnenraum 5. Die Fig. 2 zeigt den Querschnitt im Bereich des Brust/Schultergurtteiles 1. Die Fig. 3 zeigt den Querschnitt im Übergangsbereich 4. Seitlich wird der aufblasbare Gurtinnenraum 5 begrenzt von Gewebebahnen 15 und 16, die im jeweiligen Randbereich des Ober- und Untergurtes 13, 14 vernäht sind. Im dargestellten Normalbetrieb sind die Gewebebahnen gefaltet. In bevorzugter Weise kommt eine zweiseitige Zick-Zack-Faltung mit Spiegelsymmetrie zur vertikalen Längsmittelebene des Gurtbandes zum Einsatz. Bei den Gewebebahnen 15, 16 kann es sich um Airbaggewebe handeln, das mit dem Ober- und Untergurt 13, 14 vernäht oder verwebt ist.

Der Obergurt 13 und der Untergurt 14 können aus einem Sicherheitsgurtgewebe gebildet sein, das dünner als das herkömmliche Sicherheitsgurtgewebe ist. Die Gesamtbruchlast der beiden Gurtbänder 13, 14 entspricht der Bruchlast eines herkömmlichen in Serie eingesetzten Sicherheitsgurtbandes.

Zum Aufblasen der Sicherheitsgurtteile (Brust/Schultergurtteil 1 und Beckengurtteil 2) dient eine Gaszuführung 10. Die Gaszuführung 10 kann fest am Endbeschlag 3 vorgesehen sein. Es ist auch möglich, die Gaszuführung 10 in das Beschlagteil des Endbeschlages 3 zu integrieren. Die Gaszuführung 10 kann als Gasgenerator bevorzugt Kaltgasgenerator, der das Füllgas in komprimierter Form enthält, ausgebildet sein. Es ist jedoch auch möglich, als Füllgas ein Warmgas, welches von einem pyrotechnischen Gasgenerator erzeugt wird, zu verwenden. Da, wie auch die Fig. 5 zeigt, die Gaszuführung 10 mit dem Endbeschlag 3 schwenkbar um die Achse 8 angeordnet ist, erfolgt eine Anpassung an die jeweilige Angurtlage, welche der Beckengurtteil 2 jeweils einnimmt. Hierdurch wird vermieden, daß die Verbindung zwischen der Gaszuführung 10 und dem Beckengurtteil 2 bzw. einer durch den Beckengurtteil 2 verlaufenden Gasleitung 11 beschädigt oder unterbrochen wird.

Die Gasleitung 11, welche als flexibler Schlauch ausgebildet sein kann, wird durch den aufblasbaren Gurtinnenraum 5 des Beckengurtes 2 bis in den Übergangsbereich 4 zwischen Brust- und Beckengurtteil geführt wie es in der Querschnittsdarstellung der Fig. 3 gezeigt ist. Im Übergangsbereich 4 besitzt das schlauchförmige Wandmaterial der Gasleitung 11 eine Verstärkungseinlage 21, welche beim dargestellten Ausführungsbeispiel Wendelform hat und beispielsweise von einer Wendelfeder aus Stahl gebildet werden kann. Hierdurch wird im Übergangsbereich 4, der, wie oben schon erläutert, durch die Wegstrecke für die Angurtgeometrie zwischen 5%-Frau bis 95%-Mann definiert ist, ein Gaskanal 6 mit einem Öffnungsquerschnitt geschaffen, der geringer insbesondere wesentlich geringer ist als der Durchmesser des mit Füllgas füllbaren Gurtinnenraums 5 bei aufgeblasenen Gurtteilen. Dieser Gaskanal 6 mit seinem Öffnungsquerschnitt wird auch dann beibehalten, wenn das Einsteckteil 9 in das hierfür im Fahrzeug vorgesehene Sicherheitsgurtschloß bei angelegtem Sicherheitsgurt eingesteckt ist. Der Gaskanal 6 wird insbesondere im Bereich der Umlenkstelle 7, welche sich innerhalb des Übergangsbereiches 4 bei der jeweiligen Angurtsituation ergibt, aufrechterhalten. Dies erfolgt aufgrund der in radialer Richtung versteifenden Wirkung der Verstärkungseinlage 21. Diese Verstärkungseinlage 21 ist derart ausgebildet, daß sie im wesentlichen parallel mit dem Obergurt 13 und dem Untergurt 14 um die Umlenkstelle 7 umgelenkt wird, wobei die Querschnittsöffnung des Gaskanals 6 beibehalten wird. Wenn der Sicherheitsgurt abgelegt und in die Parkposition zurückgebracht wird, kehrt aufgrund der von der Rückholfeder des Sicherheitsgurtaufrollers ausgeübten Rückzugskraft des Sicherheitsgurtband zwischen dem Umlenkbeschlag 3 und der Umlenkstelle etwa in Schulterhöhe in eine gerade Form zurück. Die federnd ausgebildete Verstärkungseinlage 21, z.B. Wendelfeder, beinhaltet eine Rückstellkraft in Richtung zu einer geradlinigen axialen Ausdehnung. Durch diese mechanisch in der Verstärkungseinlage gespeicherten Rückstellkraft wird die Verstärkungseinlage 21 im wesentlichen in ihre in axialer Richtung geradlinige Form zurückgebracht. Da der übrige Teil der Gasleitung 11, der sich durch den Gurtinnenraum 5 des Beckengurtteiles 2 erstreckt, ausreichend flexibel ausgebildet ist, nimmt auch dieser Gasleitungsteil eine im wesentlichen geradlinige Form an.

Wie insbesondere aus den Fig. 1 und 4 zu ersehen ist, erstreckt sich die Gasleitung 11 mit einem Fortsatz über den Übergangsbereich 4 hinaus bis in den Brust/Schultergurtteil 1. Auf diese Weise wird eine ständige Gasströmungsverbindung zwischen der Gaszuführung 10, welche im Bereich des Endbeschlages 3 vorgesehen ist, bis in den Gurtinnenraum 5 des Brust/Schultergurtteiles 1 aufrechterhalten.

Bei einem Unfallgeschehen wird, beispielsweise ausgelöst durch einen fahrzeugsensitiven Trägheitssensor, die Gaszuführung 10 aktiviert und ein Füllgas, insbesondere Kaltgas durch die Gasleitung 11 und über den Gaskanal 6, welcher auch bei angelegtem Sicherheitsgurt geöffnet ist, in den Gurtinnenraum 5 des Brust/Schultergurtteils 1 eingeleitet. Gegebenenfalls können hierbei weitere angeformte und mit dem Gurtinnenraum 5 verbundene Gaskissen, welche eine Aufprallschutzfunktion, beispielsweise Seitenaufprallschutz haben, mit dem Füllgas gefüllt werden. Beim Füllen des Brust/Schultergurtteils 1 baut sich innerhalb sehr kurzer Zeit ein Gegendruck auf, der die Befüllung auch des Beckengurtteils bewirkt. Hierzu können in der Gasleitung 11 Öffnungen 12 vorgesehen sein, durch welche das Füllgas seitlich in den Gurtinnenraum 5 des Beckengurtteiles 2 abgeblasen wird. Beim Befüllen des Brust/Schultergurtteiles 1 sind diese Öffnungen geschlossen insbesondere durch das auf den Öffnungen 12 aufliegende Gewebe des Beckengurtteiles. Insbesondere bei der Anwendung von Kaltgas breitet sich dieses zunächst in die Richtung aus, in welcher der geringste Gegendruck herrscht, d.h. durch den Öffnungsquerschnitt der Gasleitung 11 und des Gaskanals 6, wodurch zuerst der Gurtinnenraum 5 des Brust/Schultergurtteiles 1 gefüllt wird und sich dann der Gegendruck zum Befüllen des Beckengurtteiles 2 ausbildet. Bei zunehmendem Gegendruck wird auch dieser Bereich vollständig befüllt.

In den Fig. 6 und 7 sind Ausführungsformen für das Einsteckteil 9 vorgesehen. Das Einsteckteil 9 besitzt eine in herkömmlicher Weise ausgebildete Einsteckzunge 22. Ferner ist am Einsteckteil 9 eine Umlenkstelle 7 vorgesehen, welche bei der Ausführungsform der Fig. 6 einen relativ großen Krümmungsradius aufweist. Bei der Ausführungsform der Fig. 7 ist der Krümmungsradius der Umlenkstelle 7 kleiner ausgebildet und kann durch eine herkömmliche Umlenkkante, wie sie bei den im Einsatz befindlichen Einsteckteilen zur Anwendung kommt, gebildet werden.

## Patentansprüche

1. Dreipunkt-Sicherheitsgurt mit
- wenigstens im Schultergurtbereich aufblasbaren Schulter- und Beckengurtteilen (1, 2) eines Sicherheitsgurtbandes (13, 14);
- einem Gaskanal (6) mit einem Öffnungsquerschnitt, der geringer als der Querschnitt des gefüllten Gurtinnenraumes ist, an einer Umlenkstelle (7) eines in ein Gurtschloß einsteckbaren Einsteckteils (9), an welcher Umlenkstelle bei angelegtem Sicherheitsgurt das Sicherheitsgurtband in einem Übergangsbereich (4) vom Beckengurtteil (2) zum Schultergurtteil (1) umgelenkt ist und eine Gasströmungsverbindung zwischen den Gurtinnenräumen des Schultergurtteiles (1) und des Beckengurtteiles (2) herstellt;
- einer Gaszuführung (10) im Bereich eines entgegengesetzt zum Übergangsbereich (4) liegenden Endes des Beckengurtteiles (2); und
- einem durchgehenden auffüllbaren Gurtinnenraum (5) im den Schulter- und Beckengurtteil (1, 2) sowie den Übergangsbereich (4) bildenden Sicherheitsgurtband (13, 14); wobei
- das Sicherheitsgurtband (13, 14) in seinem Übergangsbereich (4) um die Umlenkstelle (7) verschiebbar geführt ist;
**dadurch gekennzeichnet, dass**
- der Gaskanal (6) zumindest im Gurtinnenraum (5) des um die Umlenkstelle (7) geführten Übergangsbereiches (4) eine radial verstärkte Gasleitung (11) bildet, über deren Öffnungsquerschnitt die Gurtinnenräume des Schultergurtteiles (1) und des Beckengurtteiles (2) aufblasbar sind.

2. Dreipunkt-Sicherheitsgurt nach Anspruch 1, **dadurch gekennzeichnet, daß** die Gaszuführung (10) an dem Ende des Beckengurtteiles (2) vorgesehen ist, das mit einem am Fahrzeugaufbau befestigten Endbeschlag (3) verbunden ist.

3. Dreipunkt-Sicherheitsgurt nach Ansprüche 1 oder 2, **dadurch gekennzeichnet, daß** von der Gaszuführung (10) zum Gaskanal (6) durch den Gurtinnenraum (5) des Beckengurtteiles (2) eine Gasleitung (11) geführt ist, mit welcher der Brust/Schultergurtteil (1) und der Beckengurtteil (2) befüllbar sind.

4. Dreipunkt-Sicherheitsgurt nach Anspruch 3, **dadurch gekennzeichnet, daß** die Gasleitung (11) aus einem sich dem jeweiligen Verlauf des Beckengurtteils (2) anpassenden flexiblen Material besteht.

5. Dreipunkt-Sicherheitsgurt nach Anspruch 2, **dadurch gekennzeichnet, daß** die Gaszuführung (10) am Endbeschlag (3) befestigt ist.

6. Dreipunkt-Sicherheitsgurt nach Anspruch 3 oder 4, **dadurch gekennzeichnet, daß** in der zum Gaskanal (6) geführten Gasleitung (11) Öffnungen (12) vorgesehen sind, welche bei der Füllgaszuleitung zum Brust/Schultergurtteil (1) geschlossen sind und beim Füllen des Beckengurtteiles (2) geöffnet sind.

7. Dreipunkt-Sicherheitsgurt nach Anspruch 6, **dadurch gekennzeichnet, daß** die Öffnungen (12) durch das an der Gasleitung (11) anliegende Gurtmaterial geschlossen sind.

8. Dreipunkt-Sicherheitsgurt nach einem der Ansprüche 1 bis 7, **dadurch gekennzeichnet, daß** zumindest das Wandmaterial, welches den Gaskanal (6) bildet, in radialer Richtung steifer ausgebildet ist, als das Wandmaterial der Gasleitung (11).

9. Dreipunkt-Sicherheitsgurt nach Anspruch 8, **dadurch gekennzeichnet, daß** das Wandmaterial des Gaskanals (6) eine Verstärkungseinlage (21) insbesondere in Wendelform aufweist.

10. Dreipunktsicherheitsgurt nach Anspruch 8 oder 9, **dadurch gekennzeichnet, daß** zur Bildung des Gaskanals ein Rohrkrümmer vorgesehen ist.

11. Dreipunkt-Sicherheitsgurt nach Anspruch 9, **dadurch gekennzeichnet, daß** die Verstärkungseinlage (21) eine Federkraft aufweist, welche die gebogene Verstärkungseinlage in eine sich im wesentlichen in axialer Richtung geradlinig erstreckenden Form zurückbringt.

12. Dreipunkt-Sicherheitsgurt nach einem der Ansprüche 1 bis 11, **dadurch gekennzeichnet, daß** der Gaskanal (6) und die Gasleitung (11) von einem durchgehenden Schlauch gebildet sind.

13. Dreipunkt-Sicherheitsgurt nach einem der Ansprüche 1 bis 12, **dadurch gekennzeichnet, daß** das Sicherheitsgurtband zumindest im aufblasbaren Gurtteil Gurtbänder (Obergurt 13, Untergurt 14) aufweist, zwischen denen der aufblasbare Gurtinnenraum (5) gebildet ist.

14. Dreipunkt-Sicherheitsgurt nach Anspruch 13, **dadurch gekennzeichnet, daß** zwischen den beiden Gurtbändern (13, 14) zwei Gewebebahnen (15, 16) angeordnet sind, welche die seitlichen Wände des aufblasbaren Gurtinnenraums (5) bilden.

15. Dreipunkt-Sicherheitsgurt nach einem der Ansprüche 1 bis 14, **dadurch gekennzeichnet, daß** das Füllgas ein Kalt- oder Warmgas ist.

## Claims

1. A three-point seat belt having
shoulder and lap belt parts (1, 2) of a seat belt webbing strip (13, 14) inflatable at least in the shoulder belt area;
a gas duct (6) with an opening cross section which is smaller than the cross section of the filled belt interior space, at a deflection point (7) of a push-in member (9) insertable into a belt buckle, at which deflection point the seat belt webbing strip, when put on, is deflected in an area of transition (4) from the lap belt part (2) to the shoulder belt part (1) and forms a gas flow connection between the interior spaces of the shoulder belt part (1) and the lap belt part (2);
a gas feed (10) in the area of the opposite end of the lap belt part (2) from the transition area (4); and
a continuous fillable interior space (5) in the seat belt webbing strip (13, 14) forming the shoulder and lap belt parts (1, 2) and the transition area (4);
the seat belt webbing strip (13, 14) being guided displaceably about the deflection point (7) in its transition area (4);
**characterised in that**
the gas duct (6) forms a radially reinforced gas line (11) at least in the interior space (5) in the transition area (4) guided about the deflection point (7), via the opening cross section of which gas line the interior spaces in the shoulder belt part (1) and the lap belt part (2) may be inflated.

2. A three-point seat belt according to claim 1, **characterised in that** the gas feed (10) is provided at the end of the lap belt part (2) which is connected with an end fitting (3) attached to the vehicle structure.

3. A three-point seat belt according to claims 1 or 2, **characterised in that** a gas line (11) extends from the gas feed (10) to the gas duct (6) through the interior space (5) of the lap belt part (2), by means of which gas line the chest/shoulder belt part (1) and the lap belt part (2) may be filled.

4. A three-point seat belt according to claim 3, **characterised in that** the gas line (11) consists of a flexible material conformable to the respective course of the lap belt part (2).

5. A three-point seat belt according to claim 2, **characterised in that** the gas feed (10) is attached to the end fitting (3).

6. A three-point seat belt according to claim 3 or claim 4, **characterised in that** openings (12) are provided in the gas line (11) extending to the gas duct (6), which openings are closed when inflation gas is supplied to the chest/shoulder belt part (1) and are open during inflation of the lap belt part (2).

7. A three-point seat belt according to claim 6, **characterised in that** the openings (12) are closed by the belt material adjoining the gas line (11).

8. A three-point seat belt according to one of claims 1 to 7, **characterised in that** at least the wall material forming the gas duct (6) is stiffer in the radial direction than the wall material of the gas line (11).

9. A three-point seat belt according to claim 8, **characterised in that** the wall material of the gas duct (6) comprises a reinforcing insert (21) which is in particular helical in form.

10. A three-point seat belt according to claim 8 or claim 9, **characterised in that** an elbow pipe is provided to form the gas duct.

11. A three-point seat belt according to claim 9, **characterised in that** the reinforcing insert (21) exhibits a resilience which returns the bent reinforcing insert to a shape extending substantially in a straight line in the axial direction.

12. A three-point seat belt according to one of claims 1 to 11, **characterised in that** the gas duct (6) and the gas line (11) take the form of a continuous hose.

13. A three-point seat belt according to one of claims 1 to 12, **characterised in that** the seat belt webbing comprises belt webbing strips (upper belt 13, lower belt 14), at least in the inflatable belt part, between which the inflatable interior space (5) is formed.

14. A three-point seat belt according to claim 13, **characterised in that** two fabric webs (15, 16) are arranged between the two belt webbing strips (13, 14), which webs form the side walls of the inflatable interior space (5).

15. A three-point seat belt according to one of claims 1 to 14, **characterised in that** the inflation gas is a cold or hot gas.

## Revendications

1. Ceinture de sécurité à trois points, comportant
des parties de ceinture protégeant les épaules et le bassin (1, 2) d'une sangle de ceinture de sécurité (13, 14) pouvant au moins être gonflées dans la zone de la ceinture protégeant les épaules;
un canal de gaz (6) avec une section transversale d'ouverture, inférieure à la section transversale de l'espace intérieur rempli de la ceinture, au niveau d'un point de déviation (7) d'un élément d'insertion (9) pouvant être inséré dans une boucle de verrouillage, la sangle de la ceinture de sécurité étant déviée au niveau de ce point de déviation, lors du port de la ceinture de sécurité, dans une zone de transition (4) entre la partie de la ceinture protégeant le bassin (2) et la partie de la ceinture protégeant les épaules (1), et établissant une communication d'écoulement de gaz entre les espaces intérieurs de la partie de la ceinture protégeant les épaules (1) et la partie de la ceinture protégeant le bassin (2);
une amenée de gaz (10) dans la zone d'une extrémité de la partie de la ceinture protégeant le bassin (2) opposée à la zone de transition (4); et
un espace intérieur continu remplissable (5) dans la sangle de la ceinture de sécurité (13, 14) formant la partie de la ceinture protégeant les épaules et la partie de la ceinture protégeant le bassin (1, 2) ainsi que la zone de transition (4);
la sangle de la ceinture de sécurité (13, 14) étant guidée dans sa zone de transition (4) de sorte à pouvoir être déplacée autour du point de déviation (7);
**caractérisée en ce que**
le canal de gaz (6) forme au moins dans l'espace intérieur de la ceinture (5) de la zone de transition (4) guidée autour du point de déviation (7) une conduite de gaz à renforcement radial (11), les espaces intérieurs de la partie de la ceinture protégeant les épaules (1) et de la partie de la ceinture protégeant le bassin (2) pouvant être gonflées par l'intermédiaire de la section transversale d'ouverture de cette conduite de gaz.

2. Ceinture de sécurité à trois points selon la revendication 1, **caractérisée en ce que** l'amenée de gaz (10) est agencée au niveau de l'extrémité de la partie de la ceinture protégeant le bassin (2) qui est reliée à une ferrure d'extrémité (3) fixée sur la carrosserie du véhicule.

3. Ceinture de sécurité à trois points selon les revendications 1 ou 2, **caractérisée en ce qu'**une conduite de gaz (6) s'étend de l'amenée de gaz (10) vers le canal de gaz (6) à travers l'espace intérieur (5) de la partie de la ceinture protégeant le bassin (2), permettant le remplissage de la partie de la ceinture protégeant le thorax/les épaules (1) et de la partie de la ceinture protégeant le bassin (2) par cette conduite de gaz.

4. Ceinture de sécurité à trois points selon la revendication 3, **caractérisée en ce que** la conduite de gaz (11) est composée d'un matériau flexible s'adaptant à l'extension respective de la partie de la ceinture protégeant le bassin (2).

5. Ceinture de sécurité à trois points selon la revendication 2, **caractérisée en ce que** l'amenée de gaz (10) est fixée sur la ferrure d'extrémité (3).

6. Ceinture de sécurité à trois points selon les revendications 3 ou 4, **caractérisée en ce que** la conduite de gaz (11) s'étendant vers le canal de gaz (6) comporte des ouvertures (12), fermées lors de l'amenée de gaz de remplissage vers la partie de la ceinture protégeant le thorax/les épaules (1) et ouvertes lors du remplissage de la partie de la ceinture protégeant le bassin (2).

7. Ceinture de sécurité à trois points selon la revendication 6, **caractérisée en ce que** les ouvertures (12) sont fermées par le matériau de la ceinture reposant sur la conduite de gaz (11).

8. Ceinture de sécurité à trois points selon l'une des revendications 1 à 7, **caractérisée en ce qu'**au moins le matériau de la paroi constituant le canal de gaz (6) a une configuration plus rigide dans la direction radiale que le matériau de la paroi de la conduite de gaz (11).

9. Ceinture de sécurité à trois points selon la revendication 8, **caractérisée en ce que** le matériau de la paroi du canal de gaz (6) comporte une garniture de renforcement (21), en particulier sous forme d'une spirale.

10. Ceinture de sécurité à trois points selon les revendications 8 ou 9, **caractérisée en ce qu'**un raccord coudé est prévu pour former le canal de gaz.

11. Ceinture de sécurité à trois points selon la revendication 9, **caractérisée en ce que** la garniture de renforcement (21) a une force élastique ramenant la garniture de renforcement courbée dans une forme s'étendant pratiquement rectiligne en direction axiale.

12. Ceinture de sécurité à trois points selon l'une des revendications 1 à 11, **caractérisée en ce que** le canal de gaz (6) et la conduite de gaz (11) sont constitués par un tuyau continu.

13. Ceinture de sécurité à trois points selon l'une des revendications 1 à 12, **caractérisée en ce que** la sangle de la ceinture de sécurité comporte au moins dans la partie de ceinture gonflable des sangles de ceinture (ceinture supérieure 13, ceinture inférieure 14), entre lesquelles est formé l'espace intérieur gonflable de la ceinture (5).

14. Ceinture de sécurité à trois points selon la revendication 13, **caractérisée en ce que** deux bandes de tissu (15, 16), constituant les parois latérales de l'espace intérieur gonflable de la ceinture (5) sont agencées entre les deux sangles de la ceinture (13, 14).

15. Ceinture de sécurité à trois points selon l'une des revendications 1 à 14, **caractérisée en ce que** le gaz de remplissage est un gaz froid ou un gaz chaud.
